(19) Europäisches Patentamt
European Patent Office
Office européen des brevets

(11) **EP 4 163 660 A2**

(12) **EUROPEAN PATENT APPLICATION**

(43) Date of publication:
**12.04.2023 Bulletin 2023/15**

(51) International Patent Classification (IPC):
**G01S 5/02** (2006.01)

(21) Application number: **22199818.0**

(22) Date of filing: **05.10.2022**

(52) Cooperative Patent Classification (CPC):
**G01S 5/0242; G01S 5/021; G01S 5/02216;**
G01S 5/0289

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **07.10.2021 FI 20216039**

(71) Applicant: **Iiwari Tracking Solutions Oy
88610 Vuokatti (FI)**

(72) Inventors:
• **KÄMÄRÄINEN, Jukka
88610 Vuokatti (FI)**
• **ERKKILÄ, Pertti
88610 Vuokatti (FI)**

(74) Representative: **Laine IP Oy
Porkkalankatu 24
00180 Helsinki (FI)**

(54) **WIRELESS POSITIONING**

(57)      According to an example embodiment, there is provided a base station apparatus configured to store an initial planned location of the apparatus, to receive first messages from a master base station, each first message comprising a first timestamp indicating a transmission time of the first message, and to transmit second messages, each second message comprising a second timestamp indicating a transmission time of the second message and a location estimate of the apparatus, to receive second messages from peer apparatuses, and to receive third messages from the master base station, and configured to to determine a location of the apparatus by performing an iterative process, wherein each iteration comprises determining an updated location estimate of the apparatus based on a received first message, received at least one second message and a received third message, and determining a quality criterion of the updated location estimate of the apparatus.

FIGURE 5

EP 4 163 660 A2

**Description**

FIELD

The present invention relates to positioning of base stations using electromagnetic waves, sound or optical signals. Positioning may comprise determining a location of one or more base stations, for example.

BACKGROUND

Determining a location of a device using wireless signals may be accomplished by using signals from wireless stations of known locations. Wireless signals may, in general, comprise radio signals, or signals in other parts of the electromagnetic spectrum than the radio part or sound signals.

Trilateration comprises determining locations of points by measuring distances. To determine a location on a two-dimensional surface, such as terrain, determining that a location lies on two intersecting circles provides two possible locations. A third circle, or another kind of additional piece of information, may be used to select one of the two possible locations. This method is also referred to as TOA positioning, time of arrival location method.

Triangulation on the other hand comprises determining a location using triangles that are determined for positioning. This method is also referred to as AOA positioning, angle of arrival location method. Unlike trilateration, in triangulation angles are determined, rather than distances. A combination of trilateration and triangulation, that is, determination of both angles and distances, may be referred to as triangulateration.

Multilateration, on the other hand, is based on determining differences in distance to known locations, rather than distances as such. When two known stations are used, the location is determined as lying on a hyperbolic curve or surface and additional information may be employed to select point on the hyperbolic curve or surface as the estimated location of the device. This method is also referred to as TDOA positioning, time difference of arrival location method. Wireless stations may be configured to determine their location using one or more methods. Positioning methods further may include satellite positioning, for example based on the global positioning system, GPS, or Galileo satellite constellations, and positioning based on wireless local area networking access point names.

SUMMARY OF THE INVENTION

According to some aspects, there is provided the subject-matter of the independent claims. Some embodiments are defined in the dependent claims.

According to a first aspect of the present invention, there is provided a base station apparatus comprising a memory configured to store an initial planned location of the base station apparatus, a transceiver configured to receive first messages from a master base station, each first message comprising a first timestamp indicating a transmission time of the first message, and to transmit second messages, each second message comprising a second timestamp indicating a transmission time of the second message and a location estimate of the base station apparatus, to receive second messages from peer base station apparatuses, and to receive third messages from the master base station; and at least one processing core configured to determine a location of the base station apparatus by performing an iterative process, wherein each iteration comprises determining an updated location estimate of the base station apparatus based on a received first message, received at least one second message and a received third message, and determining a quality criterion of the updated location estimate of the base station apparatus.

According to a second aspect of the present invention, there is provided a master base station apparatus comprising a memory configured to store an initial planned location of the master base station apparatus, a transceiver configured to transmit first messages, each first message comprising a first timestamp indicating a transmission time of the first message, to receive second messages from at least two non-master base stations, each second message comprising a second timestamp indicating a transmission time of the second message and a location estimate of the respective non-master base station, and to transmit third messages, and at least one processing core configured to determine a location of the master base station apparatus by performing an iterative process, wherein each iteration comprises determining an updated location estimate of the master base station apparatus based on at least two received second messages from the at least two non-master base stations, respectively, and determining, a quality criterion of the updated location estimate of the master base station apparatus.

According to a third aspect of the present invention, there is provided a method in a base station apparatus comprising storing an initial planned location of the base station apparatus, receiving first messages from a master base station, each first message comprising a first timestamp indicating a transmission time of the first message, transmitting second messages, each second message comprising a second timestamp indicating a transmission time of the second message and a location estimate of the base station apparatus, receiving second messages from peer base station apparatuses, and receiving third messages from the master base station, and determining a location of the base station apparatus by performing an iterative process, wherein each iteration comprises determining an updated location estimate of the base station apparatus based on a received first message, received at least one second message and a received third message, and determining a quality criterion of the updated location estimate of the base station apparatus.

According to a fourth aspect of the present invention, there is provided a method in a master base station apparatus comprising storing an initial planned location of the master base station apparatus, transmitting first messages, each first message comprising a first timestamp indicating a transmission time of the first message, receiving second messages from at least two non-master base stations, each second message comprising a second timestamp indicating a transmission time of the second message and a location estimate of the respective non-master base station, and transmitting third messages, and determining a location of the master base station apparatus by performing an iterative process, wherein each iteration comprises determining an updated location estimate of the master base station apparatus based on at least two received second messages from the at least two non-master base stations, respectively, and determining, a quality criterion of the updated location estimate of the master base station apparatus.

According to a fifth aspect of the present invention, there is provided a method, comprising defining a first length of time as a time between transmissions from a master base station of two messages of a first type, defining a second length of time as a time between transmission of a first one of the messages of the first type from the master base station and a time of transmission of a signal from the first non-master base station, defining a third length of time as a time between the time of receipt of a first one of the messages of the first type at the first non-master base station and a time of receipt of a second one of the messages of the first type at the first non-master base station, defining a fourth length of time as a time between transmission of the first one of the messages of the first type from the master base station and a time of reception of the signal from the first non-master base station at the second non-master base station, defining a fifth length of time as a time between the time of receipt of the first one of the messages of the first type at the second non-master base station and a time of receipt of the second one of the messages of the first type at the second non-master base station, determining a first ratio as a ratio between the fourth length of time and the fifth length of time and a second ratio between the second length of time and the third length of time, and a difference obtained by subtracting the second ratio from the first ratio, and obtaining a time of flight between the first non-master base station and the second non-master base station by multiplying the difference by the first length of time.

According to a sixth aspect of the present invention, there is provided a computer program configured to cause a method in accordance with at least one of the third, fourth or fifth aspects to be performed, when run.

BRIEF DESCRIPTION OF THE DRAWINGS

FIGURE 1 illustrates an example system in accordance with at least some embodiments of the present invention;

FIGURE 2 illustrates an example system in accordance with at least some embodiments of the present invention;

FIGURE 3A illustrates an example system in accordance with at least some embodiments of the present invention;

FIGURE 3B illustrates time difference of arrival, TDOA, messaging in accordance with at least some embodiments of the present invention;

FIGURE 4 illustrates an example apparatus capable of supporting at least some embodiments of the present invention;

FIGURE 5 illustrates signalling in accordance with at least some embodiments of the present invention;

FIGURE 6 is a flow graph of a method in accordance with at least some embodiments of the present invention;

FIGURE 7 illustrates timestamps in accordance with at least some embodiments of the present invention, and

FIGURE 8 illustrates a method for non-master base stations to determine distances between them and other non-master base stations.

EMBODIMENTS

The herein disclosed positioning methods enable determining locations of a set of base stations, the set comprising one or more master base station(s) and at least two non-master base station, or a master base station and at least two non-master base stations, for example. The method is based on an iterative process, starting from an initial set of planned locations of the base station and involving exchange of wireless messages between the master base station and the non-master base stations. Advantageously, the base stations need not have their clocks synchronized with each other. The disclosed method finds application in initializing an installation of an indoor network of base stations, for example based on ultra wide band, UWB, wireless technology.

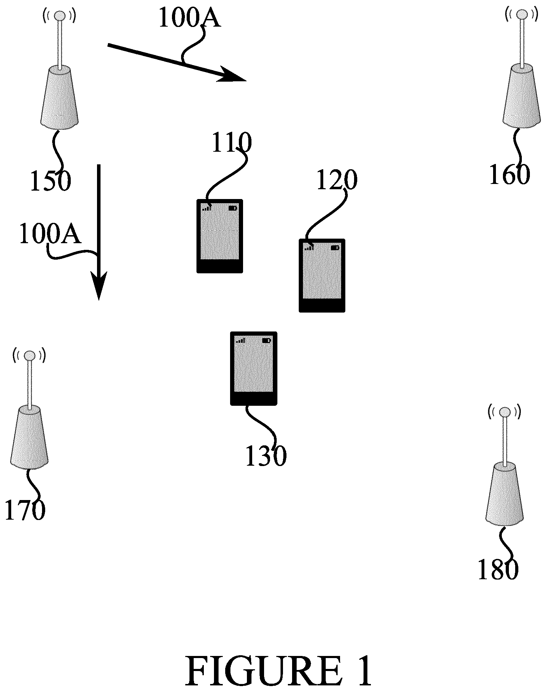

FIGURE 1 illustrates an example system in accordance with at least some embodiments of the present invention. The example system comprises master base station 150 and non-master base stations 160, 170 and 180. Initial planned locations of the base stations are known. These initial planned locations may be the locations of the base stations as defined in an installation plan, for example. Actual locations of the base stations are, for each base station, the initial planned location modified by installation error and/or deviation from the plan. Installation error may be several meters, for example. One master and three non-master base stations is one numerical example to which the present invention is not limited, rather, the principles of the present invention are usable with at least one master and two, four or indeed another number of non-master base stations, for example. In some cases, a larger number of non-master base stations results in a more accurate location estimate. In general, the set of base stations may comprise one master base station and at least two non-master base stations. In general, the set of base stations may be comprised in or as an indoor wireless network, for example based on UWB or wireless local area network, WLAN, technology.

The expression "base station" is used herein as a terminological choice, by which it is not intended to limit the scope of the disclosure. In cellular technologies the expression "base station" is common, while in non-cellular technologies the expression "access point" may be used. Examples of cellular technologies include long term evolution, LTE, and wideband code division multiple access, WCDMA. Examples of non-cellular technologies include WLAN, and worldwide interoperability for microwave access, WiMAX. However, the meaning is essentially the same, that being a fixed node with which a user device may communicate using a wireless communication interface. This fixed node transmits in the downlink and receives in the uplink. The term "base station" herein covers also nodes which may be referred to as access points, or indeed by other terms, as long as the node transmits in the downlink and receives in the uplink.

The system illustrated in FIGURE 1 further comprises tags 110, 120 and 130. The tags, or more generally, user devices, communicate with the base stations to receive service from them. For example, the tags may access network resources and/or obtain positioning service from the base stations. Each tag may comprise a device enabled to receive wireless messages transmitted by the base stations, such as master base station 150 and non-master base stations 160, 170 and 180, and to perform mathematical operations. To enable this, each tag may comprise a wireless receiver, at least one processing core and memory. Each tag may be configured to transmit a signal, or message, which is received by master and non-master base stations, to enable these base stations to determine, or participate in determining, the location of the tag.

As noted, the base stations may be configured to operate in accordance with a suitable radio technology, such as, for example, ultra wide band, UWB. UWB is a technology for transmitting a large bandwidth, for example wider than 500 megahertz or wider than 700 megahertz. UWB communications may be based on an impulse radio, which may employ a combination of burst position modulation, BPM, and binary phase shift keying, BPSK. IEEE standard 802.15.4-2011 contains an example of such a UWB communication technology. Other impulse radio technologies may alternatively or in addition be used, which enable a sufficiently accurate signal transmit and reception time determination for example, to effectively make use of the wide frequency range. Other example technologies include cellular and non-cellular technologies. In some embodiments, the base stations may be configured to operate a wireless communication technology that based on an optical signal or sound signal. Also such technologies enable signal transmission and reception time determination.

In general, a base station may be configured to operate a wireless link with a user device, such as, for example, a tag. A wireless link may comprise a downlink arranged to convey information from the base station to the user device, and/or an uplink arranged to convey information from the user device to the base station. Uplink and/or downlink communication may use, for example, UWB or another wireless technology, such as BLE, Bluetooth, WLAN, LoRa, 2G, 3G, 4G or 5G mobile technology. In addition to the above, Li-Fi technology may used to uplink and/or downlink communication. Li-Fi is a technology for wireless communication that uses visible light spectrum, ultraviolet or infrared radiation.

In accordance with at least some embodiments of the present invention, base stations such as master base station 150 and non-master base stations 160, 170 and 180 are capable of receiving wireless messages from each other.

In FIGURE 1, master base station 150 transmits an initial message 100A. Initial message 100A may be transmitted from master base station 150 in a non-directed manner, that is, omnidirectionally or to a broad set of directions in the sense that the message is not transmitted only to a specific, single direction. This enables reception of the initial message 100A by plural nodes, such as by the non-master base stations. The initial message may comprise a timestamp 100A_TX, indicating a point in time, when the master base station transmits the initial message. The master base station may, for example, obtain a current time from an internal clock of the master base station, compile the initial message using the current time and send the initial message without waiting. In some embodiments, the master base station may augment the current time obtained from the internal clock with a delay value which corresponds to the time it takes the master base station to transmit the message, such that the timestamp more accurately reflects the moment in time the initial message issues from antennas of the master base station. Delay values for different base stations may be configured during system setup or calibration, or at manufacture of the base stations, for example. The delay values are useful, for example, where the master base station and the non-master base stations have different electronics. Initial message 100A may further comprise a location estimate of master base station 150, expressed for example in geo-coordinates. The invention may be used indoors, where two- or three-dimensional location coordinates for the locations of the base stations may be used. A two-dimensional or three-dimensional location estimate of master base station 150 may have been determined in connection with installation, for example. Overall in a first initial message 100A, the location estimate of master base station 150 may be selected as the initial planned location of master base station 150.

Initial message 100A may be received by each non-master base station 160, 170 and 180. Timestamps at receipt of the initial message at the non-master base stations may be denoted 100A_BSn_RX, for non-master base station n. The non-master base stations are configured to respond to initial messages 100A by transmitting a response message 200A.

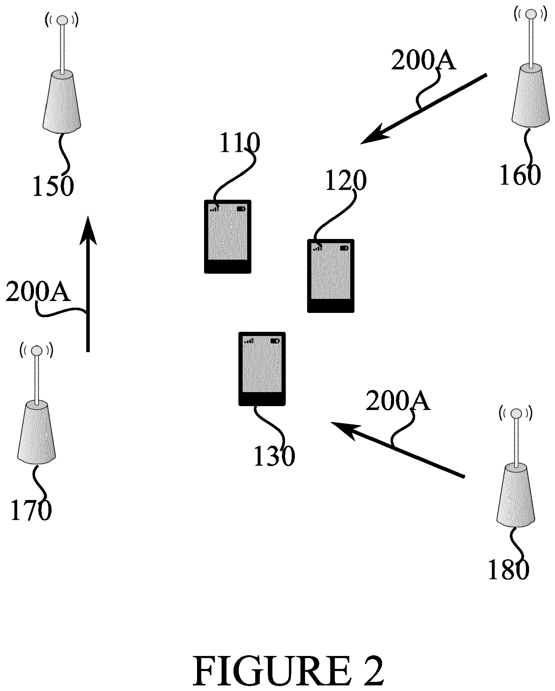

FIGURE 2 illustrates an example system in accordance with at least some embodiments of the present invention. The base stations and user devices correspond to those of FIGURE 1. The situation illustrated in FIGURE 2 takes place after the transmission of the initial message 100A, which was illustrated in FIGURE 1. FIGURE 2 illustrates the transmission of response messages 200A from the non-master base stations 160, 170 and 180. The non-master base stations may be configured to transmit a response message 200A responsive to receipt, from master base station 150, of an initial message 100A.

The non-master base stations may transmit their respective response message sequentially in turn, or simply responsive to the initial message. Response message 200A may further comprise a location estimate of the non-master base station which transmits the response message, expressed, for example, in geo-coordinates. The response messages 200A may further comprise the timestamps 100A_BSn_RX of receipt of the initial message 100A in the non-master base station n transmitting the particular response message. Initially, the initial planned location of the respective base station may be used as the location estimate. Using two- or three-dimensional coordinate systems, for example, initial location estimates of base stations may be determined in two or three dimensions, respectively, for example in connection with their installations in their locations. Non-master base stations may each have a timeslot in a frame structure, which this non-master base station is configured to use in transmitting response messages 200A. The timeslot may be configured in the non-master base station by the initial message 100A, or the non-master base stations may be otherwise configured with the timeslot. Response messages 200A may comprise a timestamp 200A_TX indicating its time of transmission. This timestamp may be generated with a delay value reflecting processing delay of the non-master base station, so the timestamp more accurately registers a time when the response message 200A was in an antenna of the transmitting base station.

Response messages 200A may, like the initial message 100A, be transmitted in a non-directed manner to enable their receipt by plural receivers. Response messages 200A are received by master base station 150 and the other non-master base stations, which are peer base station apparatuses to each other. Master base station 150 may be configured to record a timestamp indicating the moment of time when master base station 150 receives each one of the response messages. The timestamp of receipt of response message 200A from the n:th non-master base station may be expressed as 200A_BSn_RX, and for receipt at the master base station, 200A_MBSn_RX. The timestamp may be generated with a delay value reflecting a processing delay of the receiving base station, so the timestamp more accurately registers a time when the response message 200A was in an antenna of the receiving base station.

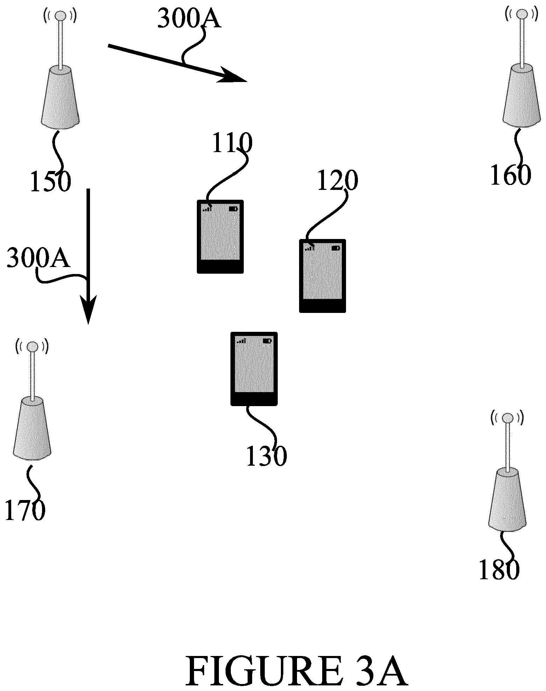

FIGURE 3A illustrates an example system in accordance with at least some embodiments of the present invention. The base stations and tags correspond to those of FIGURE 1 and FIGURE 2. The moment illustrated in FIGURE 3A takes place after the transmission of the response messages 200A, which were illustrated in FIGURE 2.

In FIGURE 3A, master base station 150 transmits a third message 300A. Third message 300A may be transmitted in a non-directed manner to enable its receipt by plural receivers. Third message 300A may comprise a timestamp indicating the time of its transmission, as was the case with initial message 100A. The timestamp indicating the time of transmission of third message 300A may be denoted as 300A_TX. Third message 300A may comprise the timestamps 200A_MBSn_RX recorded by master base station 150, indicating the times of receipt at the master base station of the response messages 200A. The transmission and reception timestamps of third message 300A may be generated with delay values of the transmitting master base station and receiving non-master base stations, respectively, to more accurately capture the time when the third message was in the respective antennas, as is described above for the earlier messages.

Third message 300A may further comprise the timestamp indicating the time of transmission from master base station 150 of initial message 100A, 100A_TX. The timestamp relating to initial message 100A may assist the non-master base stations in associating third message 300A with the correct initial message 100A. Initial message 100A may comprise a sequence number, enabling non-master base stations to include in response messages 200A the sequence number. Master base station(s) may likewise include the sequence number in third message(s) 300A. Third message 300A may further comprise a location estimate of master base station 150, for example in case initial message 100A did not comprise it. In other words, it is sufficient if one of initial message 100A and third message 300A comprises the location estimate of the master base station.

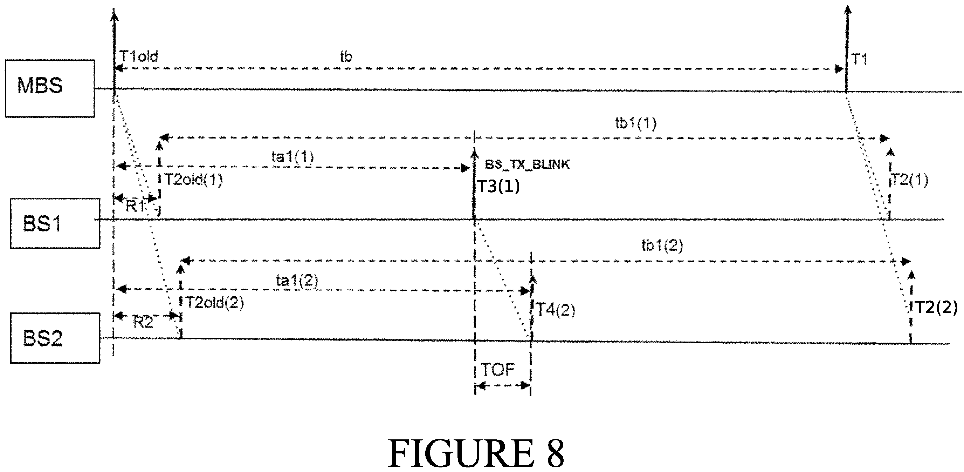

Following the messaging comprising the initial message, the response messages and the third message, each base station may then determine an updated location estimate of its own location, using the information it has as a result of the messaging described herein above. The non-master base stations may also derive distances between each other. This procedure is illustrated in FIGURE 8. The initial message, the response messages and the third message together with their processing in the base stations forms one iteration of the iterative process. In detail, each base station may determine an updated location estimate of itself, which will be communicated as the location estimate of the base station in the next iteration of the iterative location determining process. The updated location estimate may be determined based on TDOA values and, optionally, the distances between non-master base stations and optionally, distance between non-master base station and master base station. A quality criterion is determined in each iteration of the iterative process to decide, whether to stop the iterative process. The quality criterion may comprise, for example, that the location estimate has not changed more than a threshold change in the most recent iteration, indicating the location estimate has stabilized. The quality criterion may be proportional to the change of the updated estimate of the base station location, for example, the quality criterion may define that in the event the location estimate changes by less than a set percentage or amount, the process will stop. Alternatively, the quality criterion may define that in the event the location estimate changes by less than a predefined percentage during each of a predetermined number of consecutive most recent iterations, the iterative process will stop. For example, if the location estimate changes by less than five percent during three consecutive iterations, the base stations may be configured to stop the iterative process. When calculating location of BS or MBS, the TDOA values of other non-master and master base stations may be weighted according to sums of their BS_MBS and BS-BS pair quality criterion. Correspondingly, a time of flight value may be weighted based on how good the metric underlying the quality criterion the device, a master or non-master base station, has. In other words, once BS1 and BS2 have good quality criteria metric as to their location, then the TDOA value between BS1 and BS2 is emphasized in location determination. Likewise, the time of flight value from BS1 and BS2 may then be given more weight. Using the quality criterion metric enables stopping calibration, once each base station satisfies the quality criterion.

An example of location determination in each iteration of the iterative process is provided in the following.

In this example, firstly, each non-master base station may determine a synchronization value. A synchronization value SYNC n for base station n may be determined in a non-master base station as:

$$\mathrm{SYNC\_n} = (\mathrm{300A\_TX} - \mathrm{100A\_TX}) \,/\, (\mathrm{200A\_MBSn\_RX} - t_{BSn\_MBS} - \mathrm{100A\_TX}),$$

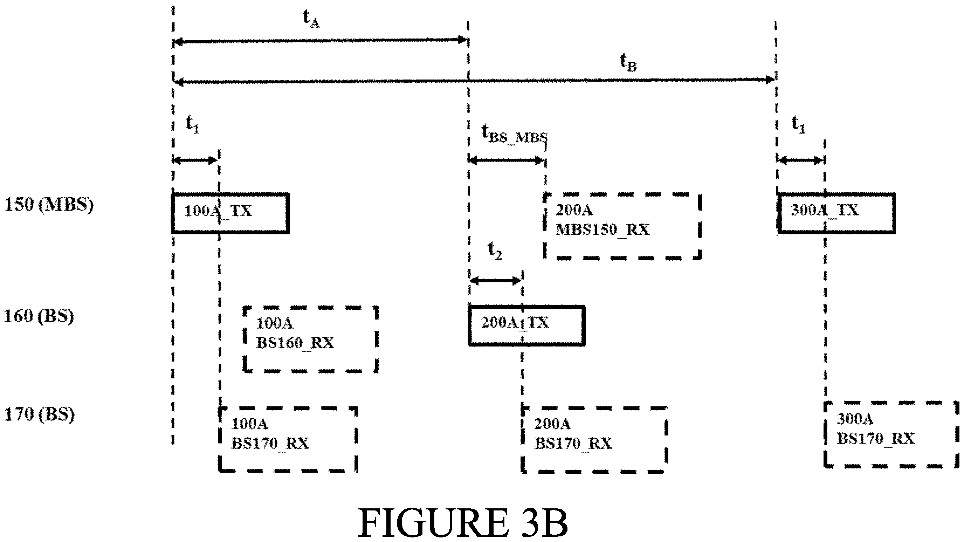

where $t_{BSn\_MBS}$ is a time-of-flight, TOF of a wireless message from non-master base station n to the master base station, see FIGURE 3B. The TOF is determined by messages 100A, 200A, and 300A using the well-known symmetrical double-sided two-way ranging, SDS-TWR, method. Or the TOF may be estimated, for example, as described in [1]. In some embodiments, the SYNC values for each non-master base station are computed in the master base station, and the SYNC values are included in third message 300A. This provides the advantage that the non-master base station, which may have more limited processing capability, do not need to determine SYNC values. The formula provided above is one example of how to determine the synchronization value, SYNC.

In the example, secondly, TDOA values are calculated. This may be obtained without synchronization of non-master base station clocks with the clock of the master by using the SYNC value. Thirdly, a time-of-flight, TOF, to the master base station is determined, and finally the updated location estimate may be determined based on the TOF, the TDOA and the location estimates of the master and non-master base stations received in messages of the present iteration. The TOF may be estimated, for example, as described in [1]. The TOF is estimated before the TDOA Known location determination methods, such as least-squares, Gauss-Newton, weighted Gauss-Newton or Bayesian solution methods may be employed. When estimating a base station location, location information of other base stations may be weighted such that location estimates with higher quality criteria are given higher weight. To enable this, quality criteria from the previous iteration may be communicated in the 200A messages along with the location information.

In each iteration, also the master base station may determine an update location estimate of itself. This may comprise, for example, using TOF values with the non-master base stations together with the location estimates they report of themselves in the 200A response messages. Alternatively, the master base station may determine its location only after the non-master base stations have converged to their final location values which fulfil the quality criterion. The TOF values may also be calculated in the master base station. In this case, non-master base stations may convey the times of receipt of 100A and 300A messages to the master base station, which may then determine the TOF values.

The master base station, non-master base station and the tags each have time counters. The time counters may have a maximum value 0xffffffffff in hexadecimal, for example. The time counters may keep track of time, for example using a 64 GHz or 128 GHz clock. Once a time counter reaches its maximum value, it may loop back to zero. The time counters may be employed in generating timestamps as described herein. The master base station, non-master base station and each tag may start in an unsynchronized manner, and these clocks may have frequency offsets, dynamic noise and static noise. Given that the clocks of the base stations are not synchronized with each other, a mechanism is needed to calculate the TDOA information. The synchronization, SYNC, parameter disclosed herein is an example of such a mechanism.

FIGURE 3B illustrates time difference of arrival, TDOA, messaging in accordance with at least some embodiments of the present invention. Master base station 150, labeled as MBS), non-master base station 160, labeled as BS, and non-master base station 170 are disposed on the left. Time advances from the left toward the right. Time $t_A$ corresponds to the time between transmission of the initial message 100A from master base station 150 to transmission of the response message 200A from non-master base station 160. Time $t_B$ corresponds to the time between transmission of the initial message 100A from master base station 150 to transmission of the third message 300A from the master base station 150.

Time $t_1$ corresponds to the time between transmission of initial message 100A from master base station 150 to its reception in non-master base station 170. The same time elapses from the transmission of third message 300A from the master base station to its receipt in non-master base station 170. Time $t_2$ corresponds to the time between transmission of response message 200A from non-master base station 160 to its reception in non-master base station 170. Time $t_{BS-MBS}$ corresponds to the time between transmission of response message 200A from non-master base station 160 to its reception in master base station 150. This delay is used in calculation of the SYNC parameter, as discussed above. The TDOA time is the difference in radio signal flight time between, a message 200A from a non-master base station 160 to the non-master base station 170 (time $t_2$) and a message 100A or 300A from the master base station 150 to the non-master base station 170 (time $t_1$). In terms of FIGURE 3B, TDOA = $t_2$ - $t_1$ or TDOA = $t_1$ - $t_2$.

In determining the SYNC values, a time counter in the master base station may be used to determine when the non-master base stations have transmitted their response messages 200A. The non-master base stations may be configured to transmit their response messages 200A asynchronously, as long as they avoid collision. A timeslot allocation can be used to avoid collisions. From the FIGURE 3B, SYNC corresponds to a ratio tB/tA.

Although a clock frequency of the non-master base station 170 time counter can significantly deviate from the clock frequency of the master base station 150 time counter, the relative transmission time of the response message 200A message sent by the non-master base station 160 can be calculated in non-master base station 170 using the SYNC value. This makes possible that the time $t_B$ is time between transmissions of the initial messages 100A_TX and third message 300A_TX and the same time passes between timestamps 100A_BS170_RX and 300A_BS170_RX in non-master base station 170. Times are same for the assumption that the non-master base station does not move after installation, during the iterative location determining procedure.

As illustrated in FIGURE 3B, using timestamps of receiving messages 100A_BS170_RX and 200A_BS170_RX can be counted in the non-master base station 170, $t_A$ = 200A_ BS170_RX - $t_2$ - (100A_BS170_RX - $t_1$). From this equation can be solved TDOA = 200A_BS170_RX - 100A_BS170_RX - $t_A$, because TDOA = $t_2$ - $t_1$. On the other hand, SYNC = $t_B$ / $t_A$, which can be converted to $t_A$ = $t_B$ / SYNC, whereby the TDOA is resolved as follows, TDOA = 200A_BS170_RX - 100A_BS170_RX - $t_B$ / SYNC. As noted above, the propagation time of messages 100A and 300A from the master base station to non-master base station 170 are the same, $t_1$, so $t_B$ can be calculated using timestamps of the receiving messages; $t_B$ = 300A_BS170_RX - 100A_BS170_RX. Now TDOA can be solved in the non-master base station 170, TDOA = 200A_BS170_RX - 100A_BS170_RX - (300A_BS170_RX - 100A_BS170_RX)/SYNC.

The time-difference-of-arrival, TDOA, from the master base station and each other non-master base station to non-master base station 170 may then be determined in each non-master base station n as: TDOA n = 200A_BS170_RX - 100A_BS170_RX - (300A_BS170_RX - 100A_BS170_RX) / SYNC_n. This formula is one example of how TDOA times may be obtained. In addition to the above example, the SYNC and TDOA values can also be calculated in another way. The relation value SYNC can also be calculated, SYNC = $t_A$ / $t_B$, whereby the SYNC is calculated as follows: SYNC_n = (200A_MBS_n_RX - $t_{BS\_MBS}$ - 100A_TX) / (300A_TX - 100A_TX). In this case, the TDOA formula has the form: TDOA = 200A_BS170_RX - 100A_BS170_RX - (300A_BS170_RX - 100A_BS170_RX) * SYNC_n.

Once the TDOA values for the other base stations have been determined, the non-master base stations may derive distances between each other. This procedure is illustrated in FIGURE 8. Then the updated non-master base station location estimates may be determined based on the TDOA values, the distances between non-master base stations, distance to master base stations and the location estimates of the masters and other non-master base stations. The location estimate may be determined using known positioning algorithms, such as iterative least squares Gauss-Newton, iterative weighted least squares Gauss-Newton and the Bayesian methods. The updated non-master base station location estimate may be included in response messages 200A from each respective non-master base station. Alternatively, the updated non-master base station location estimate may be included in a separate message. In general, the initial message 100A, the response message 200A and the third message 300A may be distinct types of message.

In general, the non-master base station may determine the TDOA values using the SYNC values.

In general, some non-master base stations, and/or master base stations, may be configured to participate in more than one cell. As the base station locations are thus iteratively determined, the locations of the cells with respect to each other will also be determined in the same process.

In general, master and non-master base station location estimates may be calculated in a gateway device or a cloud server. In this case, the non-master base stations convey their TDOA values and inter-base station distance information to the master base station, and the master base station then conveys the information onward to the gateway or cloud server, which is configured to perform the processing to obtain the location estimates. As a yet further alternative, the non-master base stations and master base station may send times of transmit and receipt of messages, such as messages 100A, 200A and 300A, to the gateway or cloud server to enable the calculation of the location estimates. As an even further alternative, TDOA and TOF values may be provided to the gateway or cloud server, to obtain the location estimates that way. Even further, the base stations may be configured to provide to the gateway or cloud server intermediate values derived in connection with partial calculation of the location estimates, to obtain the location estimates themselves from the gateway or cloud server.

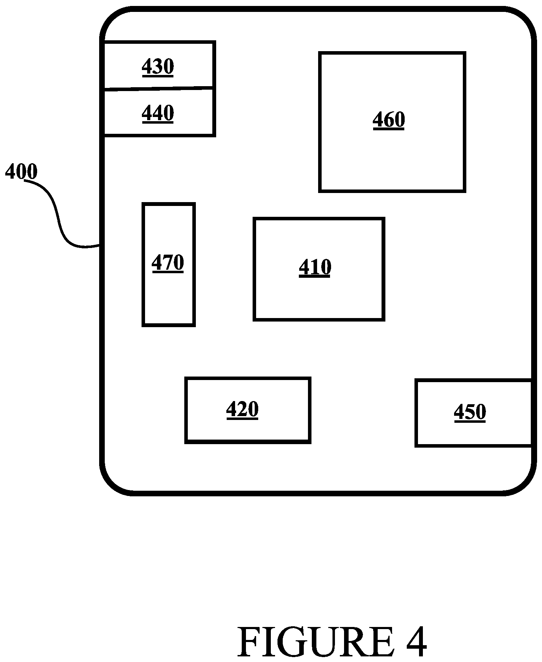

FIGURE 4 illustrates an example apparatus capable of supporting at least some embodiments of the present invention. Illustrated is device 400, which may comprise, for example, in applicable parts, a communication device such as a master or non-master base station or base station apparatus of FIGURE 1, FIGURE 2 or FIGURE 3. Comprised in device 400 is processor 410, which may comprise, for example, a single- or multi-core processor wherein a single-core processor comprises one processing core and a multi-core processor comprises more than one processing core. Processor 410 may comprise, in general, a control device. Processor 410 may comprise more than one processor. Processor 410 may be a control device. A processing core may comprise, for example, a Cortex-M4 processing core manufactured by ARM Holdings or a Steamroller processing core produced by Advanced Micro Devices Corporation. Processor 410 may comprise at least one Qualcomm Snapdragon and/or Intel Atom processor. Processor 410 may comprise at least one application-specific integrated circuit, ASIC. Processor 410 may comprise at least one field-programmable gate array, FPGA. Processor 410 may be means for performing method steps in device 400. Processor 410 may be configured, at least in part by computer instructions, to perform actions.

Device 400 may comprise memory 420. Memory 420 may comprise random-access memory and/or permanent memory. Memory 420 may comprise at least one RAM chip. Memory 420 may comprise solid-state, magnetic, optical and/or holographic memory, for example. Memory 420 may be at least in part accessible to processor 410. Memory 420 may be at least in part comprised in processor 410. Memory 420 may be means for storing information. Memory 420 may comprise computer instructions that processor 410 is configured to execute. When computer instructions configured to cause processor 410 to perform certain actions are stored in memory 420, and device 400 overall is configured to run under the direction of processor 410 using computer instructions from memory 420, processor 410 and/or its at least one processing core may be considered to be configured to perform said certain actions. Memory 420 may be at least in part comprised in processor 410. Memory 420 may be at least in part external to device 400 but accessible to device 400.

Device 400 may comprise a transmitter 430. Device 400 may comprise a receiver 440. Transmitter 430 and receiver 440 may be configured to transmit and receive, respectively, information in accordance with at least one cellular or non-cellular standard. Transmitter 430 may comprise more than one transmitter. Receiver 440 may comprise more than one receiver. Transmitter 430 and/or receiver 440 may be configured to operate in accordance with global system for mobile communication, GSM, wideband code division multiple access, WCDMA, 5G, long term evolution, LTE, IS-95, wireless local area network, WLAN, Ethernet and/or worldwide interoperability for microwave access, WiMAX, standards, for example. The transmitter 430 and receiver 440 may be configured to communicate in accordance with IEEE 802.15.4-2011 UWB impulse radio. An example of this is a Decawave DW1000 IC, or another standard or non-standard impulse radio. Transmitter 430 and receiver 440 may comprise, or be coupled with, at least one antenna for receiving and/or transmitting wireless messages. Transmitter 430 and/or receiver 440 may uses wireless communication technology that based on an optical signal or sound signal.

Device 400 may comprise a near-field communication, NFC, transceiver 450. NFC transceiver 450 may support at least one NFC technology, such as NFC, Bluetooth, BLE, Wibree or similar technologies.

Device 400 may comprise user interface, UI, 460. UI 460 may comprise at least one of a display, a keyboard, a touchscreen, a vibrator arranged to signal to a user by causing device 400 to vibrate, a speaker and a microphone. A user may be able to operate device 400 via UI 460, for example to request positioning information.

Device 400 may comprise or be arranged to accept a user identity module 470. User identity module 470 may comprise, for example, a subscriber identity module, SIM, card installable in device 400. A user identity module 470 may comprise information identifying a subscription of a user of device 400. A user identity module 470 may comprise cryptographic information usable to verify the identity of a user of device 400 and/or to facilitate encryption of communicated information and billing of the user of device 400 for communication effected via device 400.

Processor 410 may be furnished with a transmitter arranged to output information from processor 410, via electrical leads internal to device 400, to other devices comprised in device 400. Such a transmitter may comprise a serial bus transmitter arranged to, for example, output information via at least one electrical lead to memory 420 for storage therein. Alternatively to a serial bus, the transmitter may comprise a parallel bus transmitter. Likewise processor 410 may comprise a receiver arranged to receive information in processor 410, via electrical leads internal to device 400, from other devices comprised in device 400. Such a receiver may comprise a serial bus receiver arranged to, for example, receive information via at least one electrical lead from receiver 440 for processing in processor 410. Alternatively to a serial bus, the receiver may comprise a parallel bus receiver.

Device 400 may comprise further devices not illustrated in FIGURE 4. For example, where device 400 comprises a smartphone, it may comprise at least one digital camera. Some devices 400 may comprise a back-facing camera and a front-facing camera, wherein the back-facing camera may be intended for digital photography and the front-facing camera for video telephony. Device 400 may comprise a fingerprint sensor arranged to authenticate, at least in part, a user of device 400. In some embodiments, device 400 lacks at least one device described above. For example, some devices 400 may lack a NFC transceiver 450 and/or user identity module 470.

Processor 410, memory 420, transmitter 430, receiver 440, NFC transceiver 450, UI 460 and/or user identity module 470 may be interconnected by electrical leads internal to device 400 in a multitude of different ways. For example, each of the aforementioned devices may be separately connected to a master bus internal to device 400, to allow for the devices to exchange information. However, as the skilled person will appreciate, this is only one example and depending on the embodiment various ways of interconnecting at least two of the aforementioned devices may be selected without departing from the scope of the present invention. In general, the master base station and/or the non-master base station functionalities may be comprised in a same apparatus as a fifth generation, 5G, base station. The tags may be comprised in or as 5G mobile devices, such as user equipments. A tag may be configured to transmit its location to the master base station, or to another device, operably connected to a server. A cloud server is an example of a server. The tags may employ UWB or another wireless technology, such as BLE, Bluetooth or WLAN, to accomplish this. Further examples include LoRa, 2G, 3G, 4G or 5G mobile network or Li-Fi technology or others else wireless optical communication methods.

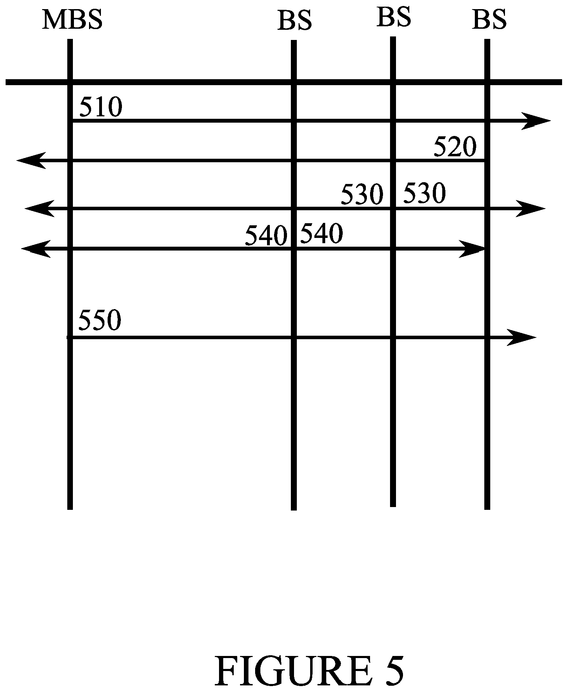

FIGURE 5 illustrates signalling in accordance with at least some embodiments of the present invention. On the vertical axes are disposed, on the left, a master base station MBS, on the right, three non-master base stations, BS. Time advances from the top toward the bottom. Reference numbers denoting transmitted messages are placed next to the transmitting entity.

In phase 510, the master base station transmits the initial message 100A, which has been described herein above. The message may be sent in an undirected manner and it may be broadcasted, by which it is meant that the message is not meant for any specific node in particular. As such, as described above, the non-master base stations may all receive initial message 100A of phase 510 and react to it.

In phases 520, 530 and 540 the non-master base stations transmit their respective response messages 200A, as described above. These messages may also be broadcasted. The non-master base stations may have a pre-determined or dynamically determined order in which they transmit these messages, to avoid a case where the messages are transmitted at the same time, causing problems in reception due to interference. The base stations, both master and non-master, may receive and timestamp the response messages, as described herein above.

In phase 550, the master base station transmits the third message 300A, which is received by the non-master base stations. After the third message, the non-master base stations are in possession of the information needed to determine the SYNC, TOF between non-master base stations, TOF to master base station from non-master base station and TDOA information described above, which may be used in determining, with the base station location estimates, in each non-master base stations, an updated location estimate for the non-master base stations. Also the master base station may determine an updated location estimate of itself, as disclosed herein above. Thus one iteration of the iterative process is completed.

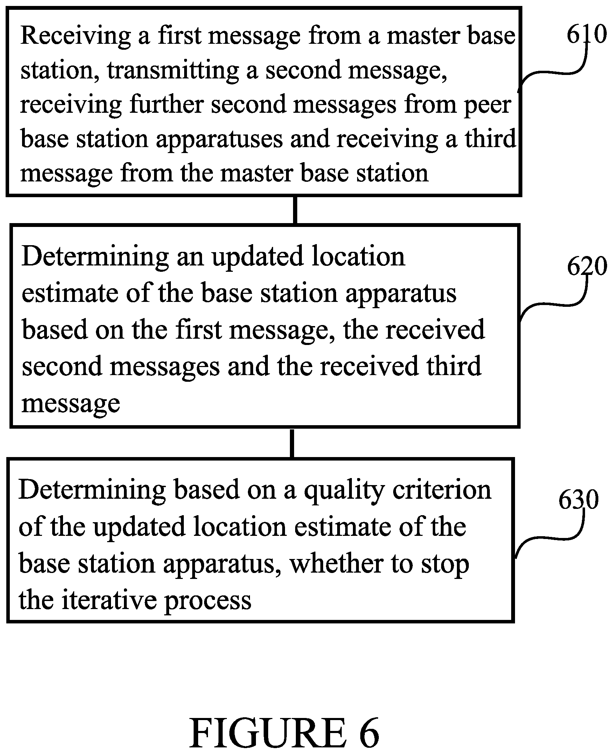

FIGURE 6 is a flow graph of a method in accordance with at least some embodiments of the present invention. The phases of the illustrated method may be performed in a non-master base station of FIGURE 1, 2 or 3, or in a control device configured to control the functioning thereof, when installed therein. The non-master base station, or the control device thereof, may be referred to as a base station apparatus.

Phase 610 comprises receiving a first message from a master base station, the first message comprising a first timestamp indicating a transmission time of the first message, transmitting a second message comprising a second timestamp indicating a transmission time of the second message and a location estimate of the base station apparatus, receiving second messages from peer base station apparatuses, and receiving third messages from the master base station. Phase 620 comprises determining an updated location estimate of the base station apparatus based on a received first message, received at least one second message and a received third message. Finally, phase 630 comprises determining based on a quality criterion of the updated location estimate of the base station apparatus, whether to stop the iterative process. Positioning may be at least partly based on the previous estimates of locations of the master and non-master base stations. These location estimates may be determined in a two- or three-dimensional coordinate system. The time difference of arrival may reflect differences in wireless propagation times for hypothetical wireless messages transmitted from the base station apparatus. The time difference of arrival from the apparatus may comprise a difference in travel time, at light speed, between on the one hand messages from the master base station to the apparatus, and on the other hand messages from the non-master base station(s) to the apparatus.

In general, a benefit is obtained from the disclosed embodiments in that plural base stations are enabled to derive their positions iteratively and autonomously, starting from the initial planned locations from an installation plan. A further advantage is that the base stations need not be synchronized with each other.

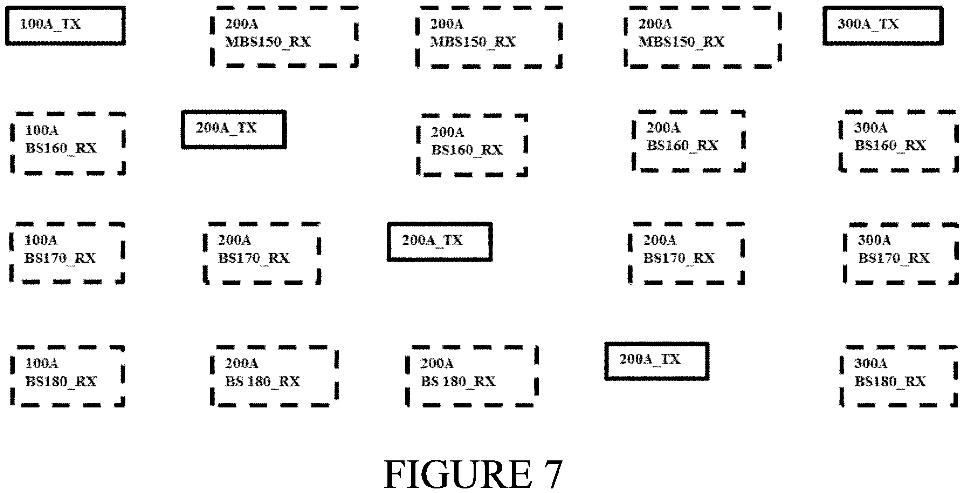

FIGURE 7 illustrates timestamps in accordance with at least some embodiments of the present invention. In the illustrated example, a master base station 150 and three non-master base stations BS_160, BS_170 and BS_180 are present. Events at the master base station are on the top line, beginning with 100A_TX and ending in 300A_TX, and events at non-master base stations are on lines under the top line, one horizontal line per non-master base station. The master base station is denoted 150 in the timestamps, and the non-master base stations are denoted 160, 170 and 180. For example, at the lower left corner, timestamp 100A_BS180_RX denotes reception in non-master base station 180 of the initial message 100A from master base station 150. The initial message may, in general, be referred to as a first message, as this message starts an iteration of the iterative process.

In some embodiments, base stations relay their timestamps, 100A_RX, 200A_TX and 300A_RX, to the master base station, which relays them onward to a node which is configured to perform the calculation tasks. The master base station may likewise relay its timestamps, 100A_TX, 200A_RX and 300A_TX, to the node configured to perform the calculation tasks. The node configured to perform the calculation tasks therefore receives the timestamps and determines TDOA values as well as the MBS-BS and BS-BS distances. In particular, the node configured to perform the calculation tasks may be configured to determine for each distance value the distance value as an average of plural determinations of the distance, for example 50 or 100 determinations.

In some embodiments, some base stations, which may be master- or non-master base stations, already have a known location which therefore does not need to be determined. This location(s) may be configured manually using a suitable user interface, for example. This location(s) may be input in terms of geo-coordinates or as x, y z coordinated in a defined setting.

Advantages of the herein disclosed method to determine distances between non-master base stations include that all BS1 ...BSn distances may be discovered by having a reference device (e.g. the master BS) transmit two messages, to which each BS responds with one message. Only the clock error of the reference device, such as the master base station, affects the accuracy of the non-master base station positioning.

A further advantage is that some non-master base stations may move, with their positions being tracked in real time as they move by transmitting the 100A, 200A and 300A messages either periodically or responsive to movement of at least one non-master base station.

In some embodiments, a mobile device, such as a smartphone, for example, may be configured to operate as the non-master base station, BS, device described in present disclosure, wherein the mobile device may act as a dynamic base station, DBS. In this case, the location network consists of fixed MBS and BS devices and mobile devices with a non-master base station role. The MBS, gateway or Cloud commands the DBS base station to act as the active base station, if necessary, or the DBS base station has its own configuration according to which it starts to operate actively if necessary. When the DBS is active, its distance is measured to the fixed MBS and BS base stations and also to the others DBS. In this way, the location of the DBS devices can be updated, for example, every one second or two seconds. The DBS device can be a tablet computer, mobile phone or other portable device with wireless technology compatible with master and non-master base stations. Full coverage of the fixed base station network is not always required, as mobile DBS devices also act as location base stations. The method provides an indoor location network that works at a lower cost.

FIGURE 8 illustrates a method for non-master base stations to determine distances between them and other non-master base stations. On the horizontal axes are, as labelled, the master base station MBS and two non-master base stations, BS1 and BS2. The MBS repeats the T1 transmission at time intervals. T1old is the previous T1 message sent by the MBS in FIGURE 8. In some embodiments, the T1old message may correspond to the 100A_TX transmission of FIGURE 3B and the T1 message may be correspond to the 300A_TX transmission of FIGURE 3B. In some embodiments, the T1 message corresponds to the 100A_TX message and the T1old to the previous 100A_TX message. Messages T1 may comprise a timestamp T1 indicating its time of transmission. Message T1old may be received by each non-master base station BS1 and BS2. Timestamps at receipt of the message at the non-master base stations may be denoted T2old(n), for non-master base station n. Message T1 also may be received by each non-master base station BS1 and BS2. Timestamps at receipt of the T1 message at the non-master base stations may be denoted T2(n), for non-master base station n. In some embodiments, T2old(n) are previous T2(n) values for non-master base station n. The non-master base stations may be configured to transmit a response message BS_TX_BLINK responsive to receipt, from master base station MBS, of a message T1old. In some embodiments, the BS_TX_BLINK message may be corresponded to the 200A_TX transmission of FIGURE 3B. Messages BS_TX_BLINK may comprise a timestamp T3(n) indicating its time of transmission, for non-master base station n. Message BS_TX_BLINK may be received by each non-master base station, in this example BS2. The timestamp of receipt of message BS_TX_BLINK from the n:th non-master base station may be expressed as T4(n).

Time $t_B$ corresponds to the time between transmission of the message Tlold from master base station MBS to transmission of the message T1 from the master base station MBS in FIGURE 8. Time tb1(n) corresponds to the time between reception of the message Tlold from master base station MBS to reception of the message T1 from the master base station MBS, for non-master base station n. Time ta1(1) corresponds to the time between reception of the message Tlold from master base station MBS to transmission of the message BS_TX_BLINK for non-master base station BS1. Time ta1(n) corresponds to the time between reception of the message Tlold from master base station MBS to reception of the message BS_TX_BLINK for the n:th non-master base station.

The distances between non-master base stations correspond to times-of-flight, TOF, of radio messages between them since the speed of light is constant. The calculation in FIGURE 8 is uses MBS-BS distance information, R1 and R2, the calculations of which are described herein above (TOF values). In the process of FIGURE 8, values ta1(1) and tb1(1) are solved for BS1, and the corresponding values ta1(2) and tb1(2) are also solved for BS2. The tb value for the master base station MBS is likewise calculated. Following these preliminary steps, the distance between two non-master base stations, TOF(1,2) may be obtained using the following formula:

$$ TOF(1,2) = (\, ta1(2)\,/\,tb1(2) - ta1(1)\,/\,tb1(1)\,)\, *tb\, *t\_unit*c $$

where t_unit corresponds to a constant, such as 1/(128*499.2e6) and c=2,9979e8 is the speed of light. The location of BS1 is obtained from the MBS-BS1 distance, the inter-non-master BS distance, TDOA values and location information of MBS, BS1 and BS2. In some embodiments, the BS1 location may be determined based on the MBS-BS1 distance, inter-BS distances and earlier location estimates of MBS, BS1 and BS2.

In FIGURE 8, the following applies (MBS_BS_range_t corresponds to R1 or R2 in FIGURE 8, the time of flight at light speed between the master base station and a respective non-master base station):

$$ tb = T1 - T1old = 300A\_TX - 100A\_TX \text{ or } tb = 100A\_TX - 100A\_TX\_prev, $$

$$ ta1(i) = T4(i) - T2old(i) + MBS\_BS\_range(i) = 200A\_TX - 100A\_RX + MBS\_BS\_range\_t $$

$$ tb1(i) = T2(i) - T2old(i) = 300A\_RX - 100A\_RX \text{ or } tb1(i) = 100A\_RX - 100A\_RX\_prev, $$

where 100A_TX_prev is a timestamp of previous 100A_TX message and 100A_RX_prev is timestamp of previous 100A_RX message

It is to be understood that the embodiments of the invention disclosed are not limited to the particular structures, process steps, or materials disclosed herein, but are extended to equivalents thereof as would be recognized by those ordinarily skilled in the relevant arts. It should also be understood that terminology employed herein is used for the purpose of describing particular embodiments only and is not intended to be limiting.

Reference throughout this specification to one embodiment or an embodiment means that a particular feature, structure, or characteristic described in connection with the embodiment is included in at least one embodiment of the present invention. Thus, appearances of the phrases "in one embodiment" or "in an embodiment" in various places throughout this specification are not necessarily all referring to the same embodiment. Where reference is made to a numerical value using a term such as, for example, about or substantially, the exact numerical value is also disclosed.

As used herein, a plurality of items, structural elements, compositional elements, and/or materials may be presented in a common list for convenience. However, these lists should be construed as though each member of the list is individually identified as a separate and unique member. Thus, no individual member of such list should be construed as a de facto equivalent of any other member of the same list solely based on their presentation in a common group without indications to the contrary. In addition, various embodiments and example of the present invention may be referred to herein along with alternatives for the various components thereof. It is understood that such embodiments, examples, and alternatives are not to be construed as de facto equivalents of one another, but are to be considered as separate and autonomous representations of the present invention.

Furthermore, the described features, structures, or characteristics may be combined in any suitable manner in one or more embodiments. In the preceding description, numerous specific details are provided, such as examples of lengths, widths, shapes, etc., to provide a thorough understanding of embodiments of the invention. One skilled in the relevant art will recognize, however, that the invention can be practiced without one or more of the specific details, or with other methods, components, materials, etc. In other instances, well-known structures, materials, or operations are not shown or described in detail to avoid obscuring aspects of the invention.

While the forgoing examples are illustrative of the principles of the present invention in one or more particular applications, it will be apparent to those of ordinary skill in the art that numerous modifications in form, usage and details of implementation can be made without the exercise of inventive faculty, and without departing from the principles and concepts of the invention. Accordingly, it is not intended that the invention be limited, except as by the claims set forth below.

The verbs "to comprise" and "to include" are used in this document as open limitations that neither exclude nor require the existence of also un-recited features. The features recited in depending claims are mutually freely combinable unless otherwise explicitly stated. Furthermore, it is to be understood that the use of "a" or "an", that is, a singular form, throughout this document does not exclude a plurality.

INDUSTRIAL APPLICABILITY

At least some embodiments of the present invention find industrial application in positioning of electronic devices.

REFERENCE SIGNS LIST

| 150 | Master base station |
| 160, 170, 180 | Non-master base stations |
| 100A | Initial message |
| 200A | Response message |
| 300A | Third message |
| 400 - 470 | Structure of the device of FIGURE 4 |
| 510 - 550 | Phases of the process of FIGURE 5 |
| 610 - 630 | Phases of the process of FIGURE 6 |

CITATIONS

[1] "An Alternative Double-Sided Two-Way Ranging Method", by Dries Neirynck, Eric Luk and Michael McLaughlin (2016 13th Workshop on Positioning, Navigation and Communications (WPNC)). DOI: 10.1109/WPNC.2016.7822844.

**Claims**

1. A base station apparatus comprising:

- a memory configured to store an initial planned location of the base station apparatus;
- a transceiver configured to receive first messages from a master base station, each first message comprising a first timestamp indicating a transmission time of the first message, and to transmit second messages, each second message comprising a second timestamp indicating a transmission time of the second message and a location estimate of the base station apparatus, to receive second messages from peer base station apparatuses, and to receive third messages from the master base station; and
- at least one processing core configured to determine a location of the base station apparatus by performing an iterative process, wherein each iteration comprises:

  ■ determining an updated location estimate of the base station apparatus based on a received first message, received at least one second message and a received third message, and
  ■ determining a quality criterion of the updated location estimate of the base station apparatus.

**2.** The base station apparatus according to claim 1, wherein the base station apparatus is configured to determine the updated location estimate further based on a ratio, between a first time delay and a second time delay, the first time delay elapsing between transmission of the first message from the master base station and transmission of the third message from the master base station, and the second time delay being obtained by subtracting from a time of receipt of the second message in the master base station the time of transmission of the first message from the master base station and a time-of-flight between the base station apparatus and the master base station.

**3.** The base station apparatus according to claim 1 or 2, wherein the third message comprises timestamps indicating for each second message of a current iteration of the iterative process, a point in time when the master base station received the respective second message.

**4.** The base station apparatus according to any of claims 1 - 3, wherein the third message comprises a timestamp indicating a point in time, when the master base station transmitted the third message.

**5.** The base station apparatus according to any of claims 1 - 4, wherein the quality criterion is proportional to a change in the updated location estimate of the base station apparatus with respect to an immediately preceding iteration of the iterative process, and the at least one processing core is configured to stop the iterative process responsive to the change being below a threshold.

**6.** The base station apparatus according to any of claims 1 - 5, wherein the base station apparatus is configured as a non-master base station apparatus, and is further configured to determine a distance from the base station apparatus to another non-master base station apparatus based on timing values of the first, second and third messages.

**7.** A master base station apparatus comprising:

- a memory configured to store an initial planned location of the master base station apparatus;
- a transceiver configured to transmit first messages, each first message comprising a first timestamp indicating a transmission time of the first message, to receive second messages from at least two non-master base stations, each second message comprising a second timestamp indicating a transmission time of the second message and a location estimate of the respective non-master base station, and to transmit third messages; and
- at least one processing core configured to determine a location of the master base station apparatus by performing an iterative process, wherein each iteration comprises:

  ▪ determining an updated location estimate of the master base station apparatus based on at least two received second messages from the at least two non-master base stations, respectively, and
  ▪ determining, a quality criterion of the updated location estimate of the master base station apparatus.

**8.** The apparatus according to claim 7, wherein the third messages comprises timestamps indicating for each second message of a current iteration of the iterative process, a point in time when the master base station apparatus received the respective second message.

**9.** The apparatus according to any of claims 7 - 8, wherein the third messages comprises a timestamp indicating a point in time, when the master base station apparatus transmitted the third message.

**10.** The apparatus according to any of claims 1 - 9, wherein the third messages include a location estimate of the master base station.

**11.** The apparatus according to any of claims 7 - 10, wherein the quality criterion is proportional to a change in the updated location estimate of the master base station apparatus with respect to an immediately preceding iteration of the iterative process, and the at least one processing core is configured to stop the iterative process responsive to the change being below a threshold.

**12.** A method in a base station apparatus comprising:

- storing an initial planned location of the base station apparatus;
- receiving first messages from a master base station, each first message comprising a first timestamp indicating a transmission time of the first message, transmitting second messages, each second message comprising a second timestamp indicating a transmission time of the second message and a location estimate of the base station apparatus, receiving second messages from peer base station apparatuses, and receiving third messages from the master base station; and

- determining a location of the base station apparatus by performing an iterative process, wherein each iteration comprises:

  ▪ determining an updated location estimate of the base station apparatus based on a received first message, received at least one second message and a received third message, and
  ▪ determining a quality criterion of the updated location estimate of the base station apparatus.

**13.** A method in a master base station apparatus comprising:

- storing an initial planned location of the master base station apparatus;
- transmitting first messages, each first message comprising a first timestamp indicating a transmission time of the first message, receiving second messages from at least two non-master base stations, each second message comprising a second timestamp indicating a transmission time of the second message and a location estimate of the respective non-master base station, and transmitting third messages; and
- determining a location of the master base station apparatus by performing an iterative process, wherein each iteration comprises:

  ▪ determining an updated location estimate of the master base station apparatus based on at least two received second messages from the at least two non-master base stations, respectively, and
  ▪ determining, a quality criterion of the updated location estimate of the master base station apparatus.

**14.** A method, comprising:

- defining a first length of time as a time between transmissions from a master base station of two messages of a first type;
- defining a second length of time as a time between transmission of a first one of the messages of the first type from the master base station and a time of transmission of a signal from the first non-master base station;
- defining a third length of time as a time between the time of receipt of a first one of the messages of the first type at the first non-master base station and a time of receipt of a second one of the messages of the first type at the first non-master base station;
- defining a fourth length of time as a time between transmission of the first one of the messages of the first type from the master base station and a time of reception of the signal from the first non-master base station at the second non-master base station;
- defining a fifth length of time as a time between the time of receipt of the first one of the messages of the first type at the second non-master base station and a time of receipt of the second one of the messages of the first type at the second non-master base station;
- determining a first ratio as a ratio between the fourth length of time and the fifth length of time and a second ratio between the second length of time and the third length of time, and a difference obtained by subtracting the second ratio from the first ratio;
- obtaining a time of flight between the first non-master base station and the second non-master base station by multiplying the difference by the first length of time.

**15.** A computer program configured to cause a method in accordance with at least one of claims 12 - 14 to be performed, when run.

# FIGURE 1

FIGURE 2

## FIGURE 3A

FIGURE 3B

EP 4 163 660 A2

FIGURE 4

FIGURE 5

Receiving a first message from a master base station, transmitting a second message, receiving further second messages from peer base station apparatuses and receiving a third message from the master base station — 610

Determining an updated location estimate of the base station apparatus based on the first message, the received second messages and the received third message — 620

Determining based on a quality criterion of the updated location estimate of the base station apparatus, whether to stop the iterative process — 630

# FIGURE 6

| 100A_TX | 200A MBS150_RX | 200A MBS150_RX | 200A MBS150_RX | 300A_TX |

| 100A BS160_RX | 200A_TX | 200A BS160_RX | 200A BS160_RX | 300A BS160_RX |

| 100A BS170_RX | 200A BS170_RX | 200A_TX | 200A BS170_RX | 300A BS170_RX |

| 100A BS180_RX | 200A BS 180_RX | 200A BS 180_RX | 200A_TX | 300A BS180_RX |

# FIGURE 7

FIGURE 8

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **DRIES NEIRYNCK ; ERIC LUK ; MICHAEL MCLAUGHLIN.** An Alternative Double-Sided Two-Way Ranging Method. *13th Workshop on Positioning, Navigation and Communications (WPNC),* 2016